# DEMANDE DE BREVET EUROPEEN

(11) **EP 4 190 516 A1**
(43) Date de publication de la demande: **07.06.2023**
(21) Numéro de dépôt: 22210478.8
(22) Date de dépôt: 30.11.2022
(51) Int. Cl.: B25J 15/06, B29C 70/38

(54) **PRÉHENSEUR DE PATCH À FORTE PÉGOSITÉ**

(30) Priorité: 02.12.2021 FR 2112853
(71) Demandeur: Safran Nacelles, 76700 Gonfreville-l'Orcher (FR)
(72) Inventeur: VENTURE, Renaud, 77550 MOISSY CRAMAYEL (FR); ROLLAND, Clément, 77550 MOISSY CRAMAYEL (FR); LEBEGUE, Maxime, 77550 MOISSY CRAMAYEL (FR); PROVOST, Benjamin, 77550 MOISSY CRAMAYEL (FR)
(74) Mandataire: Casalonga

(57) **Abrégé**

Ce préhenseur (8) pour application d'un patch (6) sur une surface, comprend un système de préhension (2) activable, une mousse déformable (3) positionnée contre le système de préhension (2), et une matière d'interface (9) déformable positionnée contre la mousse déformable (3) à l'opposé du système de préhension (2), ladite matière d'interface (9) comprenant un traitement anti-adhérence sur sa face destinée à être en contact avec le patch (6).

## Description

### Domaine technique

La présente invention concerne la fabrication de pièces composites et, en particulier, le dépôt de patchs de matière pré-imprégnée ou adhésives sur une pièce en cours de fabrication.

La présente invention concerne plus particulièrement les préhenseurs servant à saisir et draper des patchs de matière sur une pièce en cours de fabrication, un patch ayant la forme d'un fin matériau pégueux.

### Techniques antérieures

La pose de patch sur de grandes surfaces est généralement réalisée à l'aide d'un préhenseur permettant de prendre puis de déposer un patch à l'endroit voulu. Les solutions actuelles mettent par exemple en œuvre des préhenseurs pneumatiques, électrostatiques, ou encore mécaniques.

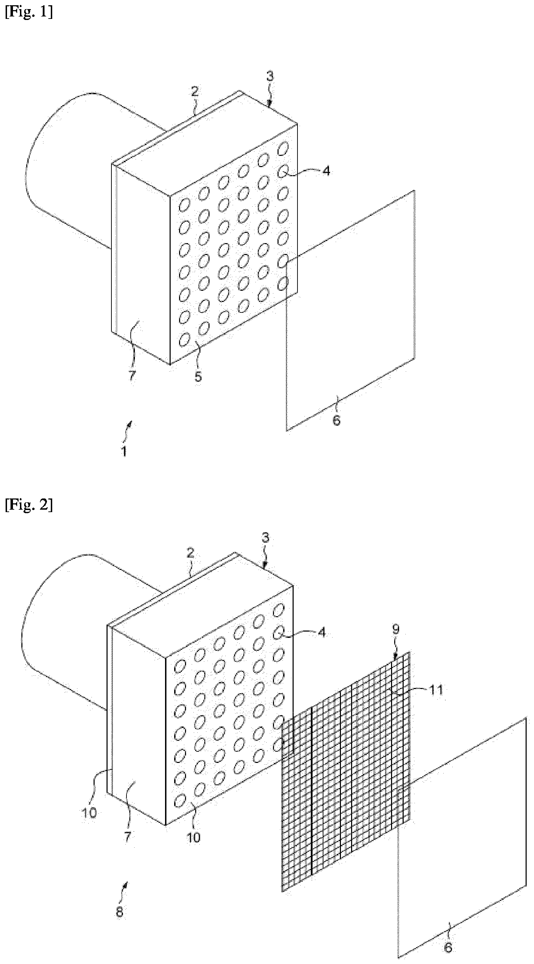

Dans le cas d'un préhenseur pneumatique, le préhenseur saisit le patch par aspiration en créant une dépression qui permet au patch de se plaquer contre le préhenseur jusqu'à ce que le préhenseur soit positionné face à la pièce sur laquelle le patch doit être positionné. Le patch est alors plaqué et légèrement compacté contre la pièce, la dépression est stoppée et le préhenseur se retire, laissant le patch sur la surface cible à draper. On a représenté sur la figure 1 un préhenseur 1 pneumatique selon l'état de la technique. Le préhenseur 1 comprend un système de préhension 2 pneumatique et une mousse déformable 3 placée contre le système de préhension 2 pneumatique.

Des orifices 4 sont pratiqués dans la mousse déformable 3 et débouchent vers le système de préhension 2 pneumatique d'une part, et vers l'extérieur d'autre part, du côté de la surface 5 destinée à être en contact avec le patch 6. Les orifices 4 ont pour but de laisser passer l'air et de permettre l'aspiration du patch 6.

Hormis sur la surface 5 où débouchent les orifices 4 et sur la surface en contact avec le système de préhension 2, la mousse déformable 3 est entourée de silicone permettant de boucher les parois 7 de la mousse déformable 3 afin de ne pas avoir de perte de vide.

La mousse déformable 3 permet en particulier de plaquer le patch 6 contre une pièce en épousant la forme de cette dernière.

Afin de faciliter la pose du patch 6, la surface 5 destinée à être en contact avec le patch est recouverte d'un matériau non pégueux, par exemple le polytétrafluoroéthylène, plus communément appelé Teflon, afin de limiter l'adhésion du patch 6 à la mousse déformable 3.

Pour augmenter l'accroche du patch à la pièce cible, il est possible de chauffer le patch afin d'augmenter sa pégosité ou son caractère collant.

Cependant, dans le cadre de la dépose de patchs fabriqués en matériau particulièrement pégueux et collant, par exemple des adhésifs, il arrive souvent que le patch colle plus à la surface du préhenseur qu'à la surface de la pièce cible, et cela malgré l'application d'une pression pneumatique positive au niveau du préhenseur au moment de la dépose. Le patch reste alors collé à la surface du préhenseur ou a tendance à se décoller lors du retrait du préhenseur et donc à ne plus adhérer à la surface de la pièce cible.

### Exposé de l'invention

La présente invention a donc pour but de pallier les inconvénients précités et de limiter le collage du patch au préhenseur, même pour des patchs de grande pégosité.

La présente invention a pour objet un préhenseur pour application d'un patch sur une surface, le préhenseur comprenant un système de préhension sélectivement activable, une mousse déformable positionnée contre le système de préhension, et une matière d'interface déformable positionnée contre la mousse déformable à l'opposé du système de préhension, ladite matière d'interface comprenant un traitement anti-adhérence sur sa face destinée à être en contact avec le patch.

Ainsi, dans un contexte de pose d'un patch particulièrement collant, ou rendu plus collant par chauffage, une matière d'interface spécifique, par exemple perforée par un maillage ou simplement traitée contre l'adhérence au patch, permet au patch de moins adhérer au préhenseur par rapport à la pièce cible et d'éviter ainsi un décollement du patch une fois celui-ci en contact avec la pièce cible.

Avantageusement, la matière d'interface est une matière perforée.

Avantageusement, la matière d'interface comprend des mailles dont les ouvertures ont une largeur allant jusqu'à 10 millimètres.

Avantageusement, la matière d'interface est une grille ou un tissu ou un film.

Selon un mode de réalisation, la matière d'interface est un tissu à délaminer ou un film de démoulage.

Avantageusement, le traitement anti-adhérence est un enduit à base de polytétrafluoroéthylène.

Avantageusement, le préhenseur comprend des moyens de fixation de la matière d'interface de sorte que la matière d'interface est interchangeable avec une autre matière d'interface.

Avantageusement, les moyens de fixation sont automatisés de sorte que la matière d'interface est interchangeable automatiquement avec une autre matière d'interface.

Selon un mode de réalisation, le système de préhension est pneumatique.

Avantageusement, la mousse déformable comprend des orifices dont les extrémités débouchent vers la matière d'interface d'une part et vers le système de préhension d'autre part.

L'invention a également pour objet un procédé de préhension et de positionnement d'un patch comprenant les étapes suivantes :
- Fixation d'une matière d'interface sur une mousse déformable de manière à former un préhenseur tel que défini précédemment, la matière d'interface étant adaptée à la pégosité du patch ;
- Activation du système de préhension pour la préhension d'un patch ; et
- Désactivation du système de préhension pour la pose du patch.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] dont il a déjà été fait mention, illustre schématiquement un préhenseur de patch selon l'état de la technique ;
[Fig 2] est une vue schématique et éclatée d'un préhenseur muni d'une matière d'interface selon l'invention ;
[Fig 3] illustre schématiquement une coupe de premiers moyens de fixation de la matière d'interface au reste du préhenseur selon l'invention ;
[Fig 4] illustre schématiquement une coupe de seconds moyens de fixation de la matière d'interface au reste du préhenseur selon l'invention ;
[Fig 5] illustre schématiquement une coupe de troisièmes moyens de fixation de la matière d'interface au reste du préhenseur selon l'invention ;
[Fig 6] illustre schématiquement une coupe de quatrièmes moyens de fixation de la matière d'interface au reste du préhenseur selon l'invention ; et
[Fig 7] illustre les étapes d'un procédé de préhension et de positionnement d'un patch à l'aide d'un préhenseur selon l'invention.

### Exposé détaillé d'au moins un mode de réalisation

On a représenté sur la figure 2 une vue schématique et éclatée d'un préhenseur 8 pour l'application d'un patch 6 sur la surface d'une pièce cible (non représentée).

Le préhenseur 8 comprend un système de préhension 2, une mousse déformable 3, et une matière d'interface 9 déformable.

Le système de préhension 2, la mousse déformable 3, et la matière d'interface 9 sont par exemple alignés et empilés les uns sur les autres.

Le système de préhension 2 est par exemple un système de préhension pneumatique et est sélectivement activable de sorte que le système de préhension 2 crée une dépression afin d'attirer un patch 6 vers le système de préhension 2. On entend par sélectivement activable la capacité du système de préhension à pouvoir saisir un patch si le système de préhension reçoit cet ordre par commande d'un ordinateur par exemple, ou ne pas le saisir si la commande de l'ordinateur l'ordonne.

Dans le cadre de l'invention, le système de préhension 2 peut également être électrostatique ou mécanique.

La mousse déformable 3 a par exemple une forme parallélépipédique dont deux faces 10 mutuellement opposées sont respectivement situées contre le système de préhension 2 d'une part, et contre la matière d'interface 9 d'autre part.

La mousse déformable 3 comprend des orifices 4 dont les extrémités débouchent au niveau des deux faces opposées 10 de la mousse déformable 3.

La mousse déformable 3 comprend un nombre d'orifices 4 limité afin de ne pas fragiliser l'intégrité de la mousse déformable 3 et du préhenseur 8.

La matière d'interface 9 a pour fonction de limiter le collage du patch sur la matière d'interface 9. Ainsi, la pose du patch 6 s'effectue sans que le patch 6 reste collé au préhenseur.

Pour cela, la matière d'interface 9 comprend un traitement anti adhérence sur sa face destinée à être en contact avec le patch 6. Par exemple, la matière d'interface 9 est recouverte d'un enduit à base de polytétrafluoroéthylène.

La matière d'interface 9, tout comme la mousse déformable 3, est déformable afin de pouvoir poser le patch 6 sur n'importe quelle forme de pièce cible (non représentée), la mousse déformable 3 et la matière d'interface 9 pouvant épouser la forme de la pièce cible lorsque le préhenseur 8 est approché contre la pièce cible. Cette capacité est obtenue en particulier avec une épaisseur de mousse déformable (3) supérieure au relief de la pièce cible. La matière d'interface et la mousse sont avantageusement élastiquement déformables et/ou à mémoire de forme.

Dans un mode de réalisation, la matière d'interface 9 a pour but d'augmenter significativement le pourcentage d'ouverture de la surface de contact du patch 6 avec le préhenseur 8. Pour cela, la matière d'interface 9 est réalisée dans un matériau perforé, par exemple une grille, ou un tissu, ou un film.

Le pourcentage d'ouverture est alors significativement augmenté par la présence de petites perforations pouvant être des mailles dans le matériau utilisé, ce qui permet peu de contact entre le patch 6 et la matière d'interface 9, donc une adhésion restreinte et un flux d'air d'aspiration élevé.

Dans un mode de réalisation, la matière d'interface 9 est une matière perforée à fort pourcentage d'ouverture, par exemple dont les parties de la matière d'interface destinées à être en contact avec le patch représentent moins de 80% de la surface totale de la matière d'interface, les perforations représentant alors au moins 20% de la surface totale. Dans le cas d'un tissu, un fort pourcentage d'ouverture augmente la capacité de la matière d'interface à laisser passer correctement le débit d'air du système de préhension pneumatique.

Dans un mode de réalisation particulier, la matière d'interface 9 est un tissu à délaminer ou un film de démoulage faiblement adhésif.

Dans un autre mode de réalisation, la matière d'interface est une grille, par exemple en kevlar ou en verre, par exemple enduite de polytétrafluoroéthylène.

Un grand pourcentage d'ouverture garantie une bonne répartition de la dépression de l'air et permet de limiter la surface de contact entre le patch 6 et la matière d'interface 9. Cependant, et afin de correctement compacter le patch 6 sur la pièce cible, les mailles de la matière d'interface 9 doivent être suffisamment étroites.

Par exemple, la matière d'interface 9 comprend des mailles 11 dont les ouvertures ont une largeur allant jusqu'à 10 mm maximum.

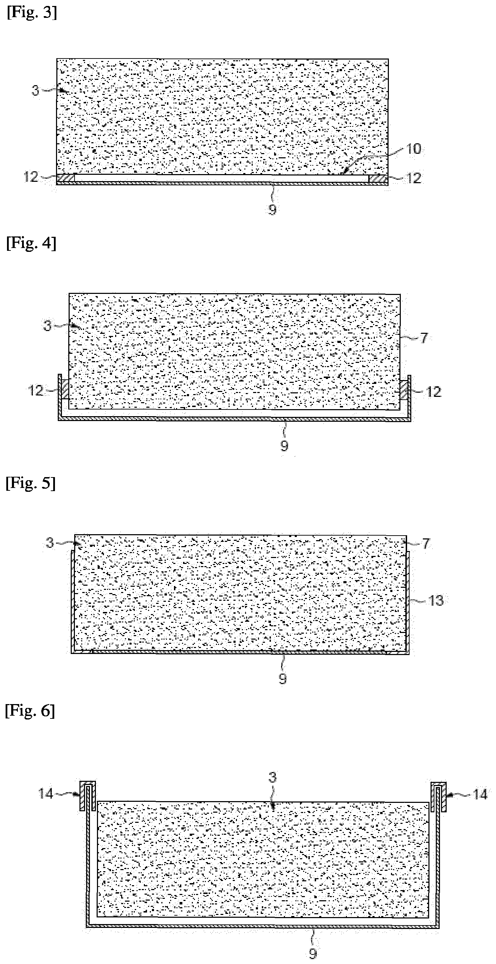

On a représenté sur les figures 3 à 6 des modes de réalisation de moyens de fixation de la matière d'interface 9 au reste du préhenseur 8. En effet, chaque patch 6 est différent et présente une pégosité différente. Ainsi, afin d'adapter au mieux le préhenseur 8 à chaque patch 6, il est utile de pouvoir changer la matière d'interface 9 selon le patch 6 à positionner. Des moyens de fixations simples et réversibles peuvent donc être privilégiés afin d'interchanger différentes matières d'interface 9.

On a représenté sur la figure 3 un premier mode de réalisation de moyens de fixation de la matière d'interface 9 sur la mousse déformable 3. Les moyens de fixation 12 comprennent par exemple un scratch, aussi appelé Velcro^{®}, un ruban adhésif, ou bien encore des aimants placés entre la matière d'interface 9 et la mousse déformable 3 sur la périphérie d'une face 10. Dans une variante non représentée, les aimants sont fixés à un support métallique sur lequel est fixée la mousse. Les moyens de fixation 12 sont par exemple directement placés sur la face 10 de la mousse déformable 3, ou bien sur des faces latérales 7 du parallélépipède formant la mousse déformable 3, comme illustré sur la figure 4.

On a représenté sur la figure 5 un troisième mode de réalisation de moyens de fixation de la matière d'interface 9 sur la mousse déformable 3. Le pourtour de la matière d'interface 9 est ici noyé dans du silicone 13 enduisant la mousse déformable 3 au niveau des faces latérales 7. Lors d'un changement de matières d'interface 9, il est ici nécessaire de supprimer le silicone 13 et de déposer une nouvelle couche de silicone.

On a représenté sur la figure 6 un quatrième mode de réalisation des moyens de fixation de la matière d'interface 9 sur la mousse déformable 3. Les moyens de fixation comprennent des mâchoires 14 ou des glissières permettant d'y positionner et d'y fixer les extrémités de la matière d'interface 9.

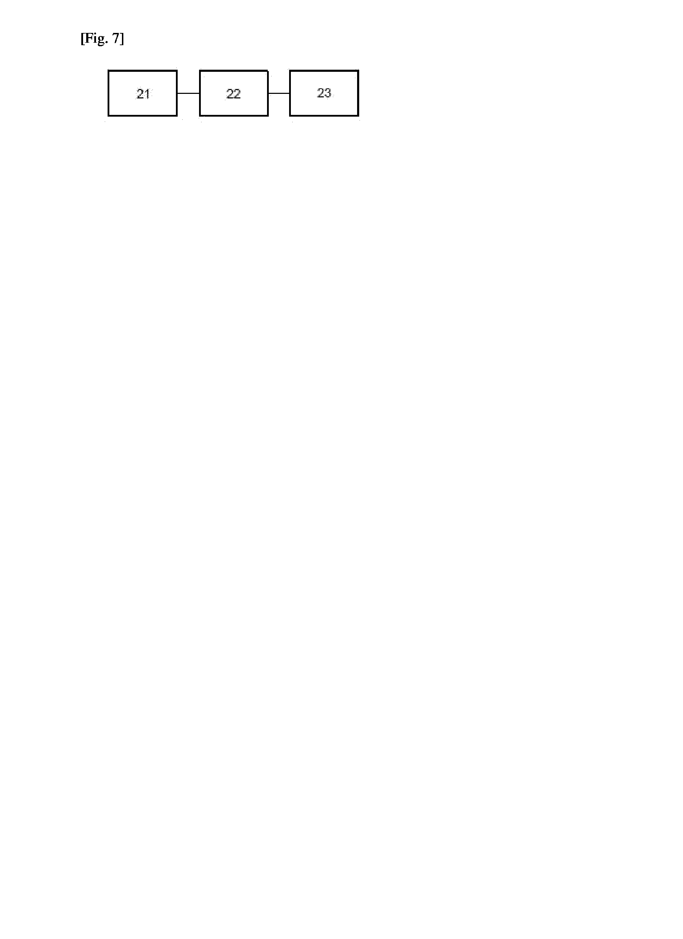

On a également représenté sur la figure 7 différentes étapes d'un procédé de préhension et de positionnement d'un patch 6.

En premier lieu, une étape 21 de fixation d'une matière d'interface 9 sur une mousse déformable 3 est mise en œuvre, de manière à former un préhenseur 8 comme décrit précédemment. Le choix de la matière d'interface 9 est déterminant afin qu'elle soit le mieux possible adaptée à la pégosité du patch 6.

Lors de l'étape 22 suivante, le système de préhension est activé. Un patch 6 est alors saisi par le préhenseur 8. Par exemple le patch 6 peut initialement être posé sur une table ou sur un présentoir dans une position permettant sa préhension. Dans le cas d'un système de préhension pneumatique, son activation crée une dépression pour attirer le patch vers le préhenseur.

Après que le préhenseur 8 ait été positionné en regard de l'emplacement de la pièce cible destinée à recevoir le patch 6, une étape 23 de désactivation du système de préhension 2 est effectuée afin d'effectuer la pose du patch 6. En parallèle, le préhenseur 8 peut appuyer contre la pièce cible et effectuer une pression pneumatique positive afin de favoriser la désolidarisation entre le patch 6 et la matière d'interface 9.

Le procédé de préhension peut être appliqué à une machine de dépôt (non représentée) comprenant un préhenseur 8 et un ordinateur distant pourvu d'un programme de supervision du fonctionnement du préhenseur 8. En particulier, le programme pilote la préhension de patchs ainsi qu'optionnellement le changement automatique de matière d'interface 9 en fonction de l'usure de la matière d'interface 9. Additionnellement ou alternativement, le changement de matière d'interface 9 s'effectue en fonction du besoin d'une matière d'interface 9 comprenant des propriétés physiques particulières, ou encore en fonction d'un nombre de préhensions de patchs prédéterminé, par exemple dix préhensions.

La machine de dépôt comprend en outre un bras articulé portant le préhenseur 8 afin de faire mouvoir dans l'espace le préhenseur 8 depuis la pièce cible à draper vers un stock de matières d'interface 9 disponibles et/ou un stock de patch à draper sur la surface cible.

La machine de dépôt comprend un stock de matière d'interface 9 pouvant être disposé sur un établi, sur lequel peut être déposé la matière d'interface que l'on souhaite échanger.

En alternative, ou additionnellement, la machine de dépôt comprend un distributeur automatique de matière d'interface 9, par exemple dans lequel sont empilées des matières d'interface 9, prêtes à être fixées sur la mousse déformable 3 d'un préhenseur 8.

## Revendications

1. Préhenseur (8) pour application d'un patch (6) sur une surface, **caractérisé en ce qu'**il comprend un système de préhension (2) sélectivement activable, une mousse déformable (3) positionnée contre le système de préhension (2), et une matière d'interface (9) déformable positionnée contre la mousse déformable (3) à l'opposé du système de préhension (2), ladite matière d'interface (9) comprenant un traitement anti-adhérence sur sa face destinée à être en contact avec le patch (6), la matière d'interface (9) étant une grille ou un tissu ou un film.

2. Préhenseur selon la revendication 1, dans lequel la matière d'interface (9) est une matière perforée.

3. Préhenseur selon l'une des revendications 1 et 2, dans lequel la matière d'interface (9) comprend des mailles (11) dont les ouvertures ont une largeur allant jusqu'à 10 millimètres.

4. Préhenseur selon l'une quelconque des revendications 1 à 3, dans lequel le traitement anti-adhérence est un enduit à base de polytétrafluoroéthylène.

5. Préhenseur selon l'une quelconque des revendications 1 à 4, comprenant des moyens de fixations (12 ; 13 ; 14) de la matière d'interface (9) de sorte que la matière d'interface (9) est interchangeable avec une autre matière d'interface (9).

6. Préhenseur selon la revendication 5, dans lequel les moyens de fixation (12 ; 13 ; 14) sont automatisés de sorte que la matière d'interface est interchangeable automatiquement avec une autre matière d'interface.

7. Préhenseur selon l'une quelconque des revendications 1 à 6, dans lequel le système de préhension (2) est pneumatique.

8. Procédé de préhension et de positionnement d'un patch (6), **caractérisé en ce qu'**il comprend les étapes suivantes :
- Fixation d'une matière d'interface (9) sur une mousse déformable (3) de manière à former un préhenseur (8) selon l'une quelconque des revendications 1 à 7, la matière d'interface (9) étant adaptée à la pégosité du patch (6) ;
- Activation du système de préhension (2) pour la préhension d'un patch (6) ; et
- Désactivation du système de préhension (2) pour la pose du patch (6).
